# EUROPEAN PATENT SPECIFICATION

(11) **EP 3 166 211 B1**
(45) Date of publication and mention of the grant of the patent: **12.06.2019**
(21) Application number: 16194482.2
(22) Date of filing: 18.10.2016
(51) Int. Cl.: H02K 3/50, H02K 3/51, B23K 20/12, H02K 15/02, B23K 103/12

(54) **METHOD OF MANUFACTURING ROTARY ELECTRICAL MACHINE STRUCTURE SUPPORT AND ROTARY ELECTRICAL MACHINE**
VERFAHREN ZUR HERSTELLUNG EINES ELEKTRISCHEN DREHMASCHINENSTRUKTURTRÄGERS UND ELEKTRISCHE DREHMASCHINE
PROCÉDÉ DE FABRICATION D'UN SUPPORT DE STRUCTURE DE MACHINE ÉLECTRIQUE TOURNANTE ET MACHINE ÉLECTRIQUE TOURNANTE

(30) Priority: 19.10.2015 JP 2015205683
(43) Date of publication of application: 10.05.2017
(73) Proprietor: Kabushiki Kaisha Toshiba, Tokyo 105-8001 (JP)
(72) Inventor: Ohashi, Tomoaki, Tokyo, 105-8001 (JP); Fujita, Yoshihiro, Tokyo, 105-8001 (JP); Osada, Oki, Tokyo, 105-8001 (JP); Nagasaki, Terumasa, Tokyo, 105-8001 (JP); Ishikawa, Satsumi, Tokyo, 105-8001 (JP); Nakano, Hiroya, Tokyo, 105-8001 (JP); Mori, Junji, Tokyo, 105-8001 (JP); Fujita, Takashi, Tokyo, 105-8001 (JP)
(74) Representative: Henkel, Breuer & Partner

(56) References cited:
- EP-A1- 1 825 946
- EP-A2- 2 913 908
- CN-A- 102 873 454
- US-A1- 2004 004 109

## Description

### FIELD

Embodiments described herein relate generally to a method of manufacturing a rotary electrical machine structure support.

### BACKGROUND

In order to absorb strain ascribable to an internal stress generated by a centrifugal force, a rotor for a rotary electrical machine used in, for example, hydroelectric power generation includes a structure support in which a relatively hard solid member is joined to a flexible stack in which a plurality of thin plates are stacked and integrated.

Such a structure support is fabricated as follows, for instance. The thin plates are first stacked and integrated, with their end parts being joined by TIG (Tungsten Inert Gas) welding, and after the end of the resultant stack is machined into a K-groove or the like, the stack machined to have the groove shape and the aforesaid solid member are further TIG-welded. As a material of the joining object members including the thin plates and so on which are to be TIG-welded, copper or a copper alloy is used.

The aforesaid structure support needs to have mechanical strength high enough to endure vibration and strain generated by the centrifugal force. However, because of the use of a hardly weldable material such as the copper or the copper alloy as its material as described above, the support structure is likely to suffer defects at welded parts and its wide range is given a welding-time thermal effect which lowers strength of the base materials, and there is also a concern about its deformation after the welding, and peeling, breakage, and so on of the thin plates.

CN 102873454 A, on which the preamble portion of claim 1 is based, discloses a method of manufacturing a rotary electrical machine structure support in that two joining object members of the same thickness are joined by friction stir welding.

EP 1825946 A1 describes a friction stir welding method of two members having different thicknesses which includes, as a necessary preparatory step before the joining of the two members by friction stir welding, the forming of a convex substitute portion on the top surface of the second or thinner member in a butt portion by a particular convex forming tool in that metal is transferred from the thicker or first member to the second member.

EP 2913908 A2 discloses a method of manufacturing a rotor coil where the (second) joining object member is composed of a wire strand bundling a plurality of wires and joining such wire strand to a reinforcing member by friction stir welding. The thickness of the wires strand is the same as that of the reinforcing member.

Under such circumstances, problems to be solved by the present invention are to provide a method of manufacturing a rotary electrical machine structure support that can have mechanical strength high enough to endure vibration and strain while suffering less defects, deformation, peeling, and breakage.

The invention provides a method of manufacturing a rotary electrical machine structure support as defined in claim 1.

### BRIEF DESCRIPTION OF THE DRAWINGS

FIG. 1 is a view schematically illustrating a cross section of a rotary electrical machine including a rotary electrical machine structure support manufactured according to a first embodiment.
FIG. 2 is a perspective view illustrating a method of manufacturing the rotary electrical machine structure support in FIG. 1, from a first outer surface side.
FIG. 3 is a view illustrating the method of manufacturing the rotary electrical machine structure support in FIG. 1, from a planar direction (upper surface direction).
FIG. 4 is a perspective view illustrating the method of manufacturing the rotary electrical machine structure support in FIG. 1, from a second outer surface side.
FIG. 5 is a perspective view illustrating a method whose manufacturing steps are partly changed from those of the method of manufacturing the rotary electrical machine structure support in FIG. 2.
FIG. 6 is a perspective view illustrating a method whose manufacturing steps are partly changed from those of the methods of manufacturing the rotary electrical machine structure support in FIG. 2 and FIG. 5.
FIG. 7 is a perspective view illustrating a method of manufacturing a rotary electrical machine structure support according to an example, from the first outer surface side.
FIG. 8 is a perspective view illustrating a method whose manufacturing steps are partly changed from those of the method of manufacturing the rotary electrical machine structure support in FIG. 7.
FIG. 9 is a perspective view illustrating a method of manufacturing a rotary electrical machine structure support according to a third embodiment, from a first outer surface side.
FIG. 10 is a perspective view illustrating a method whose manufacturing steps are partly changed from those of the method of manufacturing the rotary electrical machine structure support in FIG. 9.
FIG. 11 is a perspective view illustrating a method whose manufacturing steps are partly changed from those of the methods of manufacturing the rotary electrical machine structure support in FIG. 9 and FIG. 10.
FIG. 12 is a view illustrating the method of manufacturing the rotary electrical machine structure support in FIG. 11, from a planar direction (upper surface direction).
FIG. 13 is a perspective view illustrating a method whose manufacturing steps are partly changed from those of the methods of manufacturing the rotary electrical machine structure support in FIG. 9 to FIG. 11.

### DETAILED DESCRIPTION

A method of manufacturing a rotary electrical machine structure support according to an embodiment includes an arranging step and a joining step. In the arranging step, a first joining object member and a second joining object member composed of a plurality of stacked and integrated plate materials and thicker than the first joining object member are arranged, with end parts of the first and second joining object members being in contact with each other. In the joining step, a tool which is rotary driven is made to penetrate into a boundary part between the first joining object member and the second joining object member whose end parts are in contact with each other, from a first outer surface side of the boundary part, and the tool is slid along an interface of the boundary part, whereby a rotary electrical machine structure support in which the first and second joining object members are joined to each other is obtained.

Hereinafter, embodiments are described based on the drawings.

### <First Embodiment>

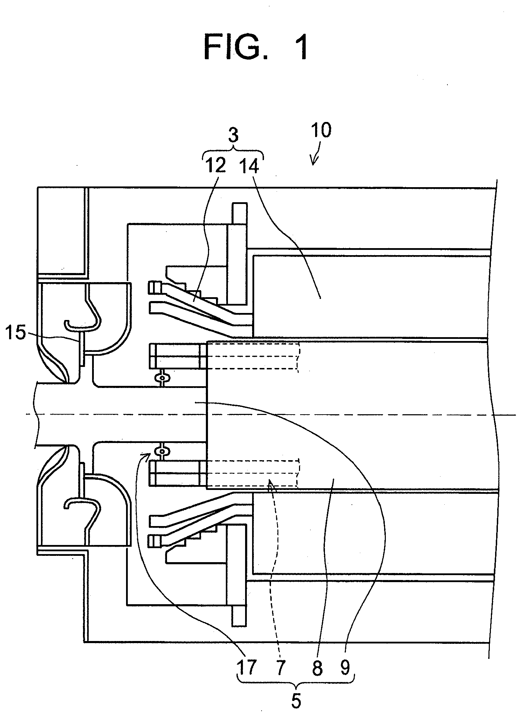

FIG. 1 illustrates a rotary electrical machine 10 including a rotary electrical machine structure support 17 manufactured by a method of manufacturing a rotary electrical machine structure support of the present embodiment. As illustrated in FIG. 1, the rotary electrical machine 10 is, for example, a variable-speed rotary electrical machine, and more specifically, for example, a variable-speed generator motor used for pumped-storage power generation and so on.

The rotary electrical machine 10 includes a stator 3, a rotor 5, and so on. The rotary electrical machine 10 further includes cooling mechanisms symmetrically provided at both ends of a rotation shaft 9 of the rotor 5 respectively and each having, for example, a fan 15 and an airflow duct, and so on. The rotation shaft 9 is supported by a structure part including the stator 3 via a bearing mechanism. The stator 3 includes a stator coil 12 and a stator core 14. The rotor 5 includes a rotor core 8 integrally provided with the rotation shaft 9, and rotor coils 7.

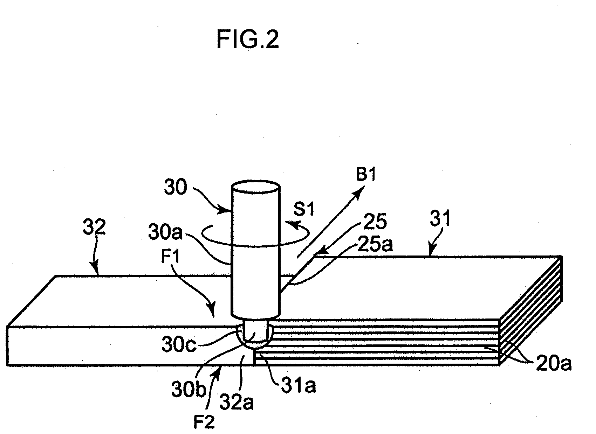

Here, the rotor 5 includes the aforesaid rotary electrical machine structure support 17 as illustrated in FIG. 1 so as to be capable of absorbing strain and vibration ascribable to an internal stress generated by a centrifugal force during the operation involving a speed change of the rotary electrical machine (variable-speed generator motor) 10. Specifically, as illustrated in later-described FIG. 2, the rotary electrical machine structure support 17 is composed of a first joining object member 32 and a second joining object member 31 which are joined to each other, the first joining object member 32 having a rectangular parallelepiped solid structure and the second joining object member 31 being a flexible stack of a plurality of stacked and integrated plate materials (thin plates) 20a. The second joining object member (stack) 31 is composed of the stacked and integrated plate materials 20a each having a thickness of, for example, 0.25 mm and thus has, for example, a 20 mm thickness, which is thicker than the aforesaid first joining object member 32 by about 1 mm

As illustrated in FIG. 1, the rotary electrical machine structure support 17 as described above is appropriately disposed at, for example, a place where the internal stress is likely to concentrate due to a structural reason when the centrifugal force acts on the rotor 5. As materials of the first and second joining object members32, 31 forming the rotary electrical machine structure support 17 as illustrated in FIG. 2, copper or a copper alloy is used. Incidentally, aluminum or an aluminum alloy can also be used as the materials to form the first and second joining object members 32, 31. Further, as the material of the second joining object member 31 which is the stack, a material having higher mechanical strength (for example, modulus of longitudinal elasticity) than that of the first joining object member 32 having the solid structure may be used.

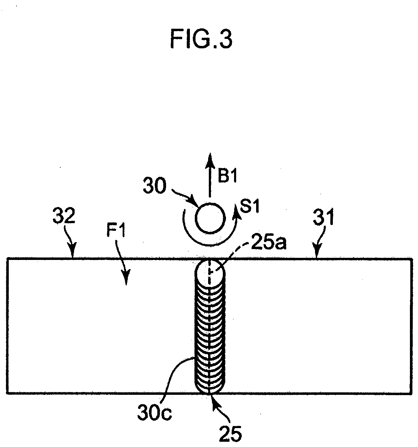

Next, a method of manufacturing the rotary electrical machine structure support of the present embodiment that suitably achieves the joining of the first joining object member 32 and the second joining object member 31 is described mainly based on FIG. 2 to FIG. 4. The method of manufacturing the rotary electrical machine structure support of the present embodiment has an arranging step, a first joining step, and a second joining step. First, in the arranging step, as illustrated in FIG. 2 and FIG. 3, the first joining object member 32 and the second joining object member 31 are arranged, with their end parts 32a, 31a being in contact with each other. More specifically, the first joining object member 32 and the second joining object member 31 which are thus arranged are fixed on a predetermined processing board via, for example, a dedicated jig or the like.

A groove shape between the first joining object member 32 and the second joining object member 31 which are joining targets is what is called an I groove (I-shape groove). That is, the whole end surfaces (opposed surfaces of the end parts 32a, 31a, of the first joining object member 32 and the second joining object member 31, which are brought into direct contact with each other in the arranging step, are both flat surfaces.

Next, in the first joining step, as illustrated in FIG. 2 and FIG. 3, a tool 30 rotary driven in the arrow S1 direction is made to penetrate into a boundary part 25 between the first joining object member 32 and the second joining object member 31 whose end parts 32a, 31a are in contact with each other, from a first outer surface F1 side of the boundary part 25. Thereafter, the rotary driven tool 30 is slid (moved) in the arrow B1 direction along an interface 25a of the boundary part 25.

The tool 30 is a joining tool in substantially a stepped columnar shape having a large diameter shoulder part 30a and a small diameter projecting part 30b provided at a tip side of the shoulder part 30a. The tool 30 is movable in triaxial directions and rotates (is rotary driven) about the axial center of itself as a rotation center. The projecting part 30b is a penetration part made to penetrate directly into the boundary part 25 (joining object parts 30c, 30d). A projecting length of the projecting part 30b is appropriately set in accordance with the penetration-direction thickness of the boundary part 25.

The operation of the tool 30 is adjusted such that its rotation speed in the arrow S1 direction is, for example, 500 rpm to 1500 rpm, its moving speed in the arrow B1 direction is, for example, 17 cm/min to 30 cm/min, and a load with which the projecting part 30b penetrates into the boundary part 25 becomes, for example, 3000 kgf to 5000 kgf.

Here, in the first joining step, as illustrated in FIG. 2 and FIG. 3, the boundary part 25 (the joining object part 30c) where the tool 30 (the projecting part 30b) which rotates while sliding penetrates is softened by a generated frictional heat, and cured after base materials are kneaded by a generated plastic flow. As a result, the first outer surface F1 side (the joining object part 30c) at the boundary part 25 is friction-stir-welded (FSW). At this time, the second joining object member 31 set thicker by about 1 mm in advance is joined and thereafter an excessive portion of the stack is removed after the joining. This can prevent peeling and breakage occurring during the joining, at the same time. Here, in a case where the thickness of the second joining object member 31 is equal to or less than that of the first joining object member 32, there is a possibility that several pieces of surface layers of the stack peel to break during the friction stir welding and accordingly the second joining object member 31 comes to have a smaller sectional area than that of the first joining object member 32, leading to strength deficiency.

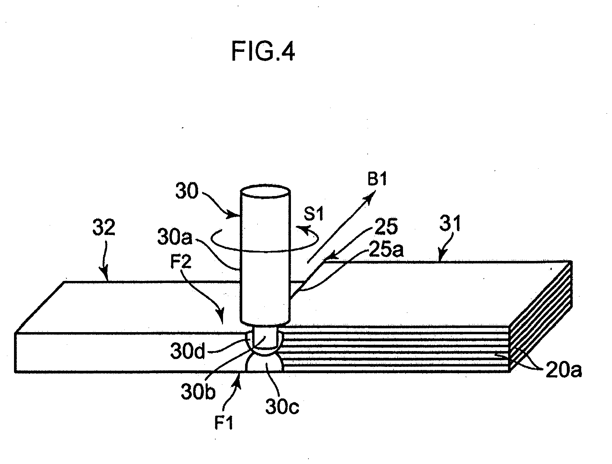

Next, in the second joining step, as illustrated in FIG. 4, the first joining object member 32 and the second joining object member 31 whose joining object part 30c has been friction-stir-welded are turned over so that a second outer surface F2 located on a rear surface side of the first outer surface F1 becomes an upper surface, and are fixed on the processing board via the aforesaid jig or the like. Further, in the second joining step, as illustrated in FIG. 4, the tool 30 rotary driven in the arrow S1 direction is made to penetrate into the boundary part 25 (joining object part 30d) from the second outer surface F2 side of the boundary part 25. Then, the rotary driven tool 30 is slid (moved) in the arrow B1 direction along the interface 25a. As a result, the rotary electrical machine structure support 17 in which the first and second joining object members 32, 31 are joined to each other is obtained. Operation conditions of the tool 30 such as its rotation speed, its moving speed, and the load are adjusted as described above. That is, in the second joining step, as illustrated in FIG. 4, the second outer surface F2 side (joining object part 30d) at the boundary part 25 is friction-stir-welded.

As is described above, the method of manufacturing the rotary electrical machine structure support of an example divides the friction stir welding of the first joining object member 32 and the second joining object member 31 into two passes (two times) for the first outer surface F1 side and the second outer surface F2 side, and thus is capable of narrowing down the thermal effect range (softening region) where the boundary part 25 (base materials) is given the thermal effect due to the friction stirring.

Specifically, for example, when the friction stir welding of the boundary part 25 is performed in one pass, the boundary part 25 is friction-stirred at a time in its whole thickness direction, and accordingly a tool having an increased size is used in consideration of, for example, rigidity, so that the thermal effect range is widened. On the other hand, in the method of manufacture of an example in which the friction stir welding of the boundary part 25 is divided into two passes, a tool having a reasonably small size is used in the two separate passes, enabling to narrow down the thermal effect range as a result.

Therefore, the method of manufacturing the rotary electrical machine structure support of an example can reduce a strength decrease ascribable to the thermal effect at the boundary part 25 (base materials) and can achieve the desired mechanical strength. Further, the method of manufacture of an example joins the first joining object member 32 and the second joining object member 31 made of copper or a copper alloy which is a hardly weldable material, without using welding technology such as TIG welding (by using the friction stir welding which is a process suitable for joining hardly weldable materials and does not involve a melting phenomenon), enabling to reduce the occurrence of defects and deformations at the joining part. Further, the method of manufacture of an example eliminates a need for, for example, the machining of the joining part into the groove shape and preheating which are required in the welding, and thus can reduce a manufacturing cost.

Further, the rotary electrical machine 10 whose rotor 5 includes the rotary electrical machine structure support 17 manufactured in the above-described manner is capable of effectively absorbing the vibration and strain generated in the rotor 5 by the centrifugal force during the operation involving a speed change.

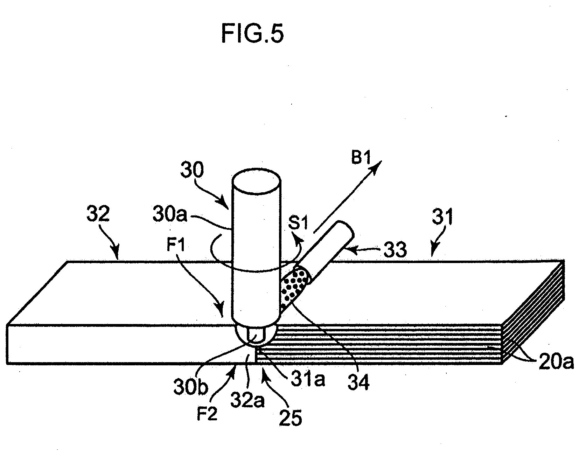

Here, as illustrated in FIG. 5, the method of manufacturing the rotary electrical machine structure support of the present embodiment can also execute the friction stir welding, for example, while supplying the same material as the material of the first or second joining object member 32, 31 onto a moving path where the rotary driven tool 30 slides. Specifically, as illustrated in FIG. 5, powder 34 of copper or a copper alloy is supplied from a powder supply device 33 during the friction stir welding from the first and second outer surface sides. Consequently, dents which are formed in the surfaces (upper surfaces) of the first and second joining object members 32, 31 due to the sliding of an end face of, for example, the shoulder part 30a of the tool 30 on the surfaces of the first and second joining object members 32, 31 can be repaired in the process of the friction stir welding.

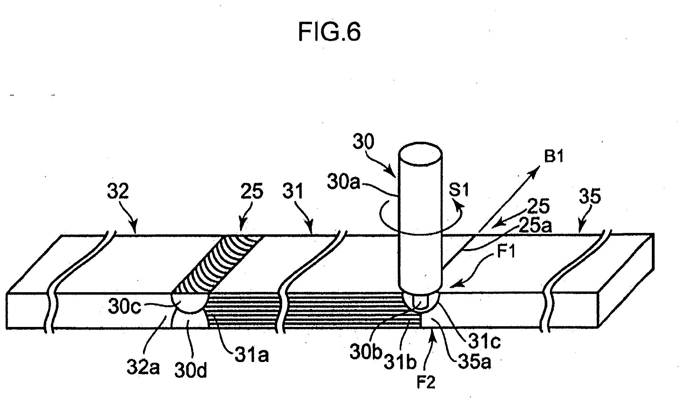

Further, as illustrated in FIG. 6, the method of manufacturing the rotary electrical machine structure support of an example is also capable of joining end parts 32a, 35a of a pair of first joining object members 32, 35 to both end parts 31a, 31b of the second joining object member 31 respectively by performing the arranging step and the first and second joining steps described above.

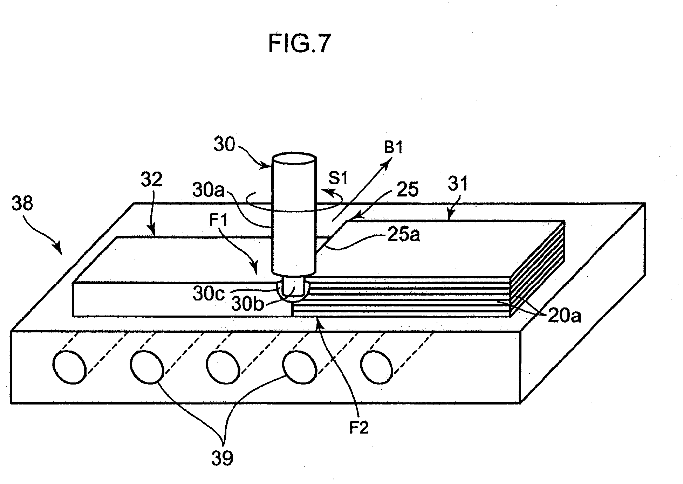

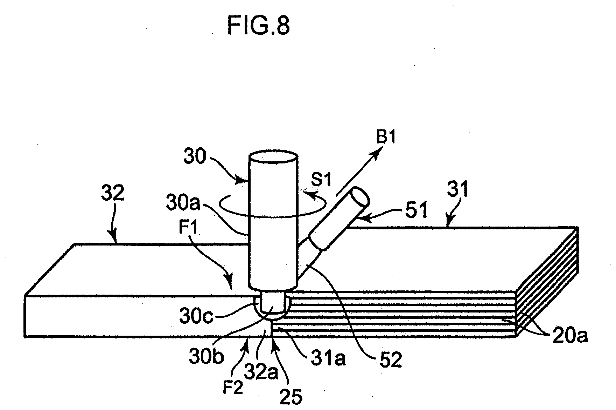

Next, an example is described based on FIG. 7 and FIG. 8. In FIG. 7 and FIG. 8, the same components as the components in the first embodiment illustrated in FIG. 2 and so on are denoted by the same reference signs, and redundant descriptions are not given.

In a method of manufacturing a rotary electrical machine structure support of the unclaimed embodiment, the first and second joining steps are performed while at least the boundary part 25 between the first joining object member 32 and the second joining object member 31 is cooled. The cooling in this case is achieved by, for example, bringing a cooling member in which a coolant flows into contact with the first and second joining object members 32, 31.

Specifically, as illustrated in FIG. 7, for example, the copper or copper alloy processing board 38, which is described in the first embodiment, where to fix the first and second joining object members 32, 31 is used as the cooling member. Further, coolant flow paths 39 where, for example, cooling water flows are formed inside the processing board 38.

Instead of the above, as illustrated in FIG. 8, the boundary part 25 may be cooled by a shielding gas supply device 51 supplying shielding gas 52 which is inert gas such as argon gas and helium gas to the boundary part 25 from the first or second outer surface F1, F2 side, when the first and second joining steps are performed.

Therefore, according to the method of manufacturing the rotary electrical machine structure support of an example heat generated during the friction stir welding can be reduced, and accordingly the strength decrease of the boundary part 25 (joining object part) ascribable to the thermal effect can be made small. This enables the boundary part 25 where the first joining object member 32 and the second joining object member 31 are joined can have predetermined rigidity.

### <Third Embodiment>

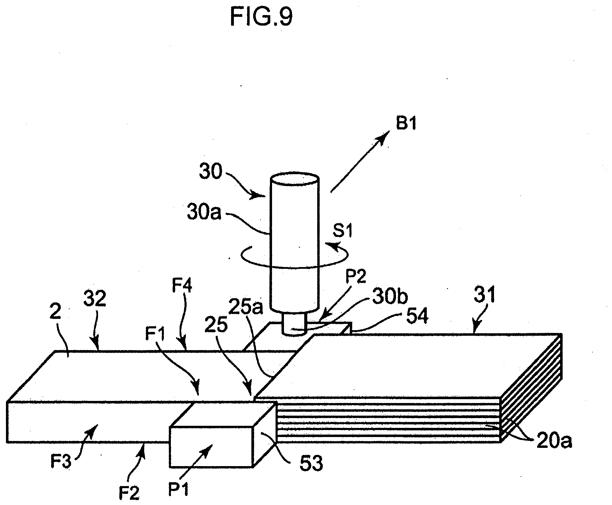

Next, a third embodiment is described based on FIG. 9 to FIG. 13. In FIG. 9 to FIG. 13, the same components as the components in the first embodiment illustrated in FIG. 2, FIG. 4 and so on are denoted by the same reference signs, and redundant descriptions are not given.

In a method of manufacturing a rotary electrical machine structure support of the present embodiment, as illustrated in FIG. 9, first in the arranging step, a pair of holding members 53, 54 is further arranged so as to hold the boundary part 25 between the first joining object member 32 and the second joining object member 31 whose end parts are in contact with each other, in the arrow P1, P2 directions from a third and a fourth outer surface F3, F4 side located on side surface sides of the first and second outer surfaces F1, F2. The pair of holding members 53, 54 is made of, for example or copper or a copper alloy.

Further, in the first and second joining steps, as illustrated in FIG. 9, the rotary driven tool 30 is made to penetrate into the holding member 53 from the first or second outer surface F1, F2 side, and is slid (moved) onto the other holding member 54 along the interface 25a of the boundary part 25.

According to this method of manufacture, it is possible to hinder joining marks formed by the projecting part (penetration part) 30b of the tool 30 during the friction stir welding from remaining on the surface (upper surface) of the boundary part 25, and in addition, it is possible to prevent the plate materials 20a from separating from the main body of the second joining object member 31. Incidentally, after the joining of the boundary part 25, the pair of joined holding members 53, 54 may be removed from the first and second joining object member 32, 31 sides.

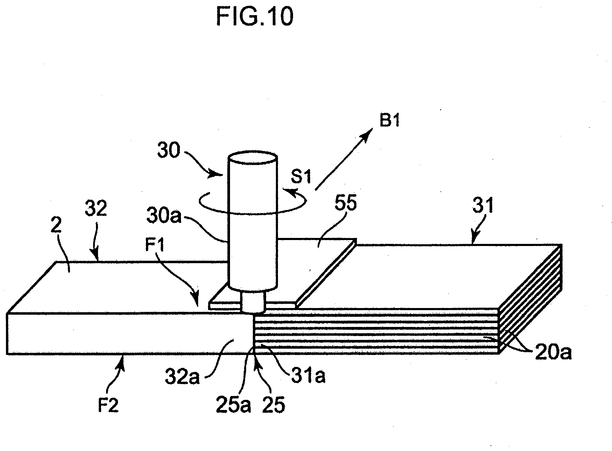

Besides, a method of manufacturing a rotary electrical machine structure support illustrated in FIG. 10 can also be employed. Specifically, in the arranging step, as illustrated in FIG. 10, a protective member 55 is further arranged on the first or second outer surface F1, F2 at the boundary part 25 between the first joining object member 32 and the second joining object member 31 whose end parts 32a, 31a are in contact with each other.

The protective member 55 is a rectangular thin sheet with a thickness of 0.5 to 2 mm whose material is copper or a copper alloy. This protective member 55 is arranged to completely cover the boundary part 25 (a boundary line on the first or second outer surface F1, F2), with its longitudinal direction aligning in the sliding direction (the arrow B1 direction) of the tool 30. The protective member 55 is fixed at this position via a jig or the like. Further, the shorter-side length of the protective member 55 is equal to or more than the diameter of the shoulder part 30a of the tool 30. Further, the thickness of the protective member 55 is equal to or more than the dents which may be formed by the sliding of, for example, the end face of the shoulder part 30a of the tool 30 during the friction stir welding.

After the protective member 55 as described above is arranged, the rotary driven tool 30 is made to penetrate into the boundary part 25 via the protective member 55 from the first or second outer surface F1, F2 side in the first and second joining steps. Then, the rotary driven tool 30 is slid (moved) along the interface 25a. According to the method of manufacture as described above, the thickness of the protective member 55 can compensate for the thickness of the dents formed by the sliding of the shoulder part 30a of the tool 30, so that the boundary part 25 (joining object part) can have joining strength. Further, the occurrence of buckling or the like in the second joining object member (stack) 31 can be reduced.

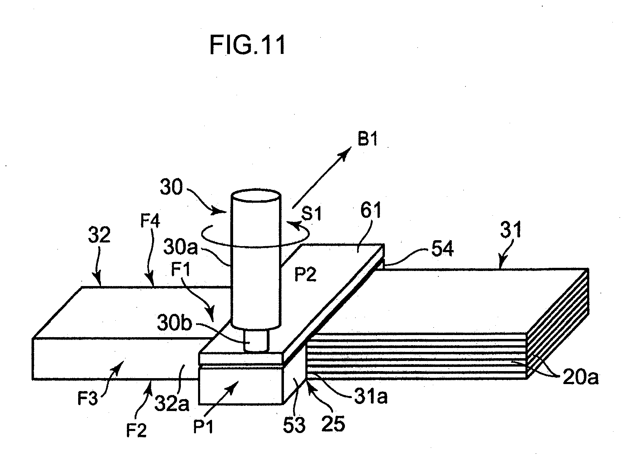

It is also possible to employ a method of manufacturing a rotary electrical machine structure support illustrated in FIG. 11. Specifically, as illustrated in FIG. 11, in the arranging step, the pair of holding members 53, 54 is arranged so as to hold the boundary part 25 between the first joining object member 32 and the second joining object member 31 whose end parts 32a, 31a are in contact with each other, from the third and fourth outer surface F3, F4 sides located on the side surface sides of the first and second outer surfaces F1, F2. In addition, a protective member 61 is further arranged on the pair of holding members 53, 54 and on the first or second outer surface F1, F2 of the boundary part 25 between the first joining object member 32 and the second joining object member 31.

Further, in the first and second joining steps, the rotary driven tool 30 is made to penetrate into the holding member 53 via the protective member 61 from the first or second outer surface F1, F2 side. Then, the rotary driven tool 30 is slid (moved) toward the other holding member 54 along the interface of the boundary part 25.

According to the method of manufacturing the rotary electrical machine structure support illustrated in FIG. 11 described above, it is possible to hinder the joining marks formed by the projecting part (penetration part) 30b of the tool 30 from remaining on the boundary part 25 and also prevent dispersion and so on of the plate materials 20a from the second joining object member 31. It is also possible to reduce the occurrence of the dents caused by the sliding of the shoulder part 30a of the tool 30. It is also possible to reduce the occurrence of the buckling and so on in the second joining object member (stack) 31.

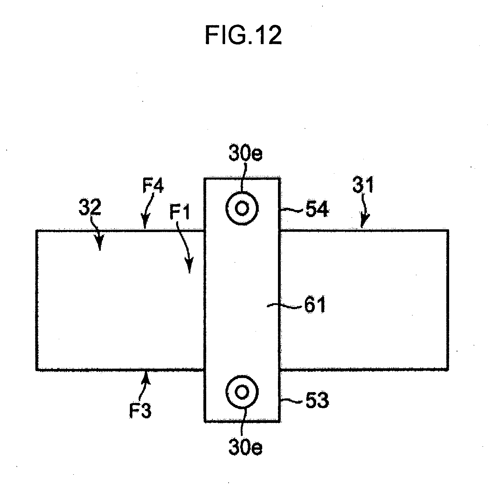

Here, in the arranging step, the pair of holding members 53, 54 and the protective member 61 which are arranged as illustrated in FIG. 11 may be integrated using friction stir welding (by providing joining parts 30e) as illustrated in FIG. 12. This can improve workability when the pair of holding members 53, 54 and the protective member 61 are set.

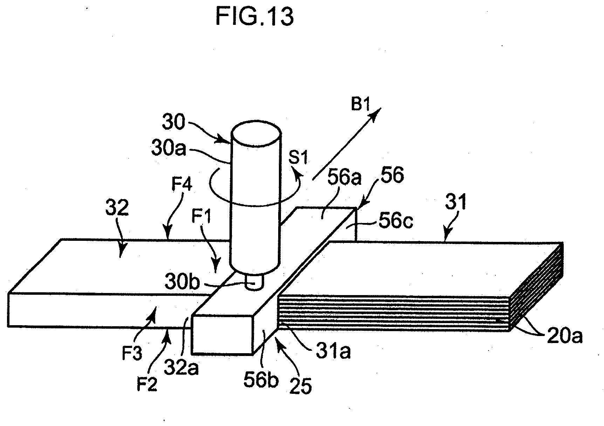

Instead of the above method of manufacture, it is also possible to employ a method of manufacturing a rotary electrical machine structure support illustrated in FIG. 13. Specifically, in the arranging step, as illustrated in FIG. 13, a joining auxiliary member 56 having a U-shaped cross section is arranged. The joining auxiliary member 56 includes: a pair of holding parts 56b, 56c having the function of the pair of holding members 53, 54 illustrated in FIG. 9 and FIG. 11; and a protective part 56a having the function of the protective members 55, 61 illustrated in FIG. 10 and FIG. 11.

As illustrated in FIG. 13, the pair of holding parts 56b, 56c holds the boundary part 25 between the first joining object member 32 and the second joining object member 31 whose end parts 31a, 32a are in contact with each other, from the third and fourth outer surface F3, F4 sides located on the side surface sides of the first and second outer surfaces F1, F2. The protective part 56a is placed on the first or second outer surface F1, F2 of the boundary part 25. That is, the joining auxiliary member 56 has the structure in which the pair of holding members 53, 54 illustrated in FIG. 9 and FIG. 11 and the protective member 55 (or 61) illustrated in FIG. 10 and FIG. 11 are integrated.

In a case where at least the first joining step is performed after the joining auxiliary member 56 as described above is arranged, the rotary driven tool 30 is made to penetrate into the holding part 56b of the joining auxiliary member 56 from the first outer surface F1 side. Then, the rotary driven tool 30 is slid (moved) onto the protective part 56a and onto the other holding part 56c in sequence along the interface 25a of the boundary part 25. Incidentally, in a case where the second joining step is performed, the friction stir welding using the tool 30 may be performed after, for example, the protective member 55 illustrated in FIG. 10 is arranged on the second outer surface F2.

According to the method of manufacturing the rotary electrical machine structure support illustrated in FIG. 13, it is possible to hinder the joining marks formed by the projecting part (penetration part) 30b of the tool 30 from remaining on the boundary part 25 as previously described, and in addition, it is possible to prevent the dispersion and so on of the plate materials 20a from the second joining object member 31. Moreover, it is possible to reduce the occurrence of the dents caused by the sliding of the shoulder part 30a of the tool 30. It is also possible to reduce the occurrence of the buckling or the like in the second joining object member 31. Further, according to the method of manufacturing the rotary electrical machine structure support illustrated in FIG. 13, the use of the joining auxiliary member 56 in which the protective part and the pair of holding parts are integrated can improve workability when the joining auxiliary member 56 is set.

According to at least one of the embodiments described above, the second joining object member composed of the plural stacked and integrated plate materials and set thicker than the first joining object member in advance is joined to the first joining object member, and the excessive plate material of the second joining object member is removed after the joining. This can achieve strength high enough to endure vibration and strain while reducing the occurrence of defects, deformation, peeling, and breakage.

## Claims

1. A method of manufacturing a rotary electrical machine structure support (17), the method comprising:
an arranging step of arranging a first joining object member (32) and a second joining object member (31) composed of a plurality of plate materials (20a) stacked and integrated in a thickness direction from a first outer surface (F1,F2) side to a second outer surface (F1,F2) side with end parts (32a,31a) of the first (32) and second joining object members (31) being in contact with each other; and
a joining step of making a tool (30) which is rotary driven penetrate into a boundary part (25) between the first joining object member (32) and the second joining object member (31) whose end parts (32a,31a) are in contact with each other, from the first outer surface (F1,F2) side of the boundary part (25), and sliding the tool (30) along an interface (25a) of the boundary part (25),
**characterized in that**
the second joining object member (31) is thicker, in the thickness direction, than the first joining object member (32), and
an excessive portion of the stack of the second joining object member (31) in the thickness direction is removed after the joining.

2. The method of manufacturing the rotary electrical machine structure support (17) according to claim 1, wherein the joining step is performed while the same material as a material of the first (32) or second joining object member (31) is supplied onto a moving path where the rotary driven tool (30) slides.

3. The method of manufacturing the rotary electrical machine structure support (17) according to claim 1 or claim 2,
wherein, in the arranging step, a pair of holding members (53,54;56b,56c) is further arranged so as to hold the boundary part (25) between the first joining object member (32) and the second joining object member (31) whose end parts (32a,31a) are in contact with each other, from third and fourth outer surface sides located on side surface sides of the first and second outer surfaces (F1,F2), and
wherein, in the joining step, the rotary driven tool (30) made to penetrate into one of the holding members (53,54;56b,56c) from the first or second outer surface (F1,F2) side is slid onto the other holding member (53,54;56b,56c) along the interface (25a) of the boundary part (25).

4. The method of manufacturing the rotary electrical machine structure support (17) according to any one of claims 1 to 3,
wherein, in the arranging step, a protective member (55;61;56a) is further arranged on the first or second outer surface (F1,F2) of the boundary part (25) between the first joining object member (32) and the second joining object member (31) whose end parts (32a,31a) are in contact with each other, and
wherein, in the joining step, the rotary driven tool (30) made to penetrate into the boundary part (25) via the protective member (55;61;56a) from the first or second outer surface (F1,F2) side is slid along the interface (25a).

## Patentansprüche

1. Ein Verfahren zum Herstellen eines Strukturträgers einer elektrischen Rotationsmaschine (17), wobei das Verfahren aufweist:
einen Anordnungsschritt eines Anordnens eines ersten Verbindungsobjektelements (32) und eines zweiten Verbindungsobjektelements (31), die aus einer Vielzahl von Plattenmaterialien (20a) aufgebaut sind, die in einer Dickenrichtung von einer Seite einer ersten äußeren Oberfläche (F1,F2) zu einer Seite einer zweiten äußeren Oberfläche (F1,F2) gestapelt und integriert sind, wobei Endteile (32a,31a) der ersten (32) und zweiten Verbindungsobjektelemente (31) in Kontakt miteinander sind, und
einen Verbindungsschritt, bei dem ein Werkzeug (30), das zur Drehung angetrieben wird, in ein Grenzteil (25) zwischen dem ersten Verbindungsobjektelement (32) und dem zweiten Verbindungsobjektelement (31), deren Endteile (32a,31a) in Kontakt miteinander sind, zum Eindringen gebracht wird, von der Seite der ersten äußeren Oberfläche (F1,F2) des Grenzteils (25), und das Werkzeug (30) entlang einer Schnittstelle (25a) des Grenzteils (25) verschoben wird,
**dadurch gekennzeichnet, dass**
das zweite Verbindungsobjektelement (31) dicker ist, in der Dickenrichtung, als das erste Verbindungsobjektelement (32), und
ein überschüssiger Abschnitt des Stapels des zweiten Verbindungsobjektelements (31) in der Dickenrichtung nach dem Verbinden entfernt wird.

2. Das Verfahren zum Herstellen des Strukturträgers der elektrischen Rotationsmaschine (17) gemäß Anspruch 1, wobei der Verbindungsschritt ausgeführt wird, während dasselbe Material wie das Material des ersten (32) oder zweiten Verbindungsobjektelements (31) auf einen Bewegungsweg zugeführt wird, wo das zur Drehung angetriebene Werkzeug (30) gleitet.

3. Das Verfahren zum Herstellen des Strukturträgers der elektrischen Rotationsmaschine (17) gemäß Anspruch 1 oder Anspruch 2,
wobei, in dem Anordnungsschritt, ein Paar von Halteelementen (53,54;56b,56c) ferner so angeordnet wird, dass das Grenzteil (25) zwischen dem ersten Verbindungsobjektelement (32) und dem zweiten Verbindungsobjektelement (31), deren Endteile (32a,31a) in Kontakt miteinander sind, von dritten und vierten äußeren Oberflächenseiten gehalten werden, die sich an Seiten von Seitenoberflächen der ersten und zweiten äußeren Oberflächen (F1,F2) befinden,
wobei, in dem Verbindungsschritt, das zur Drehung angetriebene Werkzeug (30), das in eines der Haltelemente (53,54;56b,56c) von der Seite der ersten oder zweiten äußeren Oberfläche (F1,F2) zum Eindringen gebracht wird, zu dem anderen Haltelement (53,54;56b,56c) entlang der Schnittstelle (25a) des Grenzteils (25) verschoben wird.

4. Das Verfahren zum Herstellen des Strukturträgers der elektrischen Rotationsmaschine (17) gemäß einem der Ansprüche 1 bis 3,
wobei, in dem Anordnungsschritt, ein Schutzelement (55;61;56a) ferner an der ersten oder zweiten äußeren Oberfläche (F1,F2) des Grenzteils (25) zwischen dem ersten Verbindungsobjektelement (32) und dem zweiten Verbindungsobjektelement (31), deren Endteile (32a,31a) in Kontakt miteinander sind, angeordnet wird, und
wobei in dem Verbindungsschritt, das zur Drehung angetriebene Werkzeug (30), das zum Eindringen in das Grenzteil (25) über das Schutzelement (55;61;56a) von der Seite der ersten oder zweiten äußeren Oberfläche (F1,F2) gebracht wird, entlang der Schnittstelle (25) verschoben wird.

## Revendications

1. Procédé de fabrication d'un support (17) de structure d'une machine électrique tournante, le procédé comprenant :
un stade de disposition dans lequel on dispose un premier élément (32) d'objet de jonction et un deuxième élément (31) d'objet de jonction, composés d'une pluralité de matériaux (20a) en plaque, empilés et intégrés dans une direction d'épaisseur, d'un premier côté de surface (F1, F2) extérieure à un deuxième côté de surface (F1, F2) extérieure, avec des parties (32a, 31a) d'extrémité du premier (32) et du deuxième élément (31) d'objet de jonction, qui sont en contact l'une avec l'autre et
un stade de jonction, dans lequel on fait un outil (30), qui, entraîné en rotation, pénètre dans une partie (25) limite entre le premier élément (32) d'objet de jonction et le deuxième élément (31) d'objet de jonction, dont les parties (32a, 31a) d'extrémité sont en contact l'une avec l'autre à partir du premier côté de surface (F1, F2) extérieure de la partie (25) limite, et dans lequel on fait glisser l'outil (30) sur l'interface (25a) de la partie (25) limite, **caractérisé en ce que**
le deuxième élément (31) d'objet de jonction est plus épais dans la direction de l'épaisseur, que le premier élément (32) d'objet de jonction, et
une partie en excès de l'empilement du deuxième élément (31) d'objet de jonction, dans la direction de l'épaisseur, est retirée après la jonction.

2. Procédé de fabrication du support (17) de structure d'une machine électrique tournante suivant la revendication 1, dans lequel on effectue le stade de jonction en envoyant le même matériau, comme matériau du premier (32) ou du deuxième élément (31) d'objet de jonction, sur un trajet mobile où l'outil (30), entraîné en rotation, glisse.

3. Procédé de fabrication du support (17) de structure d'une machine électrique tournant suivant la revendication 1 ou la revendication 2,
dans lequel, dans le stade de disposition, on dispose, en outre, une paire d'éléments(53, 54 ; 56b, 56c) de maintien, de manière à maintenir la partie (25) limite entre le premier élément (32) d'objet de jonction et le deuxième élément (31) d'objet de jonction, dont les parties (32a, 31a) d'extrémité sont en contact l'une avec l'autre à partir de troisième et quatrième côtés de surface extérieure, placés sur des côtés latéraux de surface de la première et de la deuxième surfaces (F1, F2) extérieures et
dans lequel, dans le stade de jonction, l'outil (30), entraîné en rotation, fait pour pénétrer dans l'un des éléments (53, 54 ; 56b, 56c) de maintien, à partir du premier ou du deuxième côté de surface (F1, F2) extérieure, est glissé sur l'autre élément (53, 54 ; 56b, 56c) de maintien suivant l'interface (25a) de la partie (25) limite.

4. Procédé de fabrication du support (17) de structure d'une machine électrique tournant suivant l'une quelconque des revendications 1 à 3,
dans lequel, dans le stade de disposition, on dispose, en outre, un élément (55 ; 61 ; 56a) de protection sur la première ou la deuxième surface (F1, F2) extérieure de la partie (25) limite, entre le premier élément (32) d'objet de jonction et le deuxième élément (31) d'objet de jonction, dont les parties (32a, 31a) d'extrémité sont en contact l'une avec l'autre et
dans lequel, dans le stade de jonction, l'outil (30), entraîné en rotation, fait pour pénétrer dans la partie (25) limite, par l'intermédiaire de l'élément (55 ; 61 ; 56a) de protection, à partir du premier ou du deuxième côté de surface (F1, F2) extérieur, est glissé suivant l'interface (25a).
